Europäisches Patentamt

European Patent Office

Office européen des brevets

(11) Numéro de publication: **0 144 303**
**A1**

## (12) DEMANDE DE BREVET EUROPEEN

(21) Numéro de dépôt: **84870158.7**

(22) Date de dépôt: **22.11.84**

(51) Int. Cl.⁴: **C 04 B 35/66**
**C 04 B 28/06**

(30) Priorité: **28.11.83 LU 85107**

(43) Date de publication de la demande:
**12.06.85 Bulletin 85/24**

(84) Etats contractants désignés:
**IT**

(71) Demandeur: **Stéphan PASEK & Cie, Société Anonyme**
**Chaussée de Dinant 13**
**B-5198 Anhee(BE)**

(72) Inventeur: **Colson, Maurice René**
**Rue de la Libération, 6**
**B-5198 Anhee(BE)**

(74) Mandataire: **van Malderen, Michel et al,**
**p.a. FREYLINGER & ASSOCIES 85/042 Boulevard de la**
**Sauvenière**
**B-4000 Liège(BE)**

(54) **Composition de béton réfractaire et application en métallurgie.**

(57) Composition de béton réfractaire.

Elle est constituée à raison de 5 à 20% et de préférence à raison d'environ 10% d'un liant constitué de silice d'une granulométrie inférieure à 5 μm et de préférence comprise entre 1 et 2 μm et d'un composé alumineux à haute teneur en alumine d'une granulométrie inférieure à 20 μm et de préférence comprise entre 0 et 10 μm dans des proportions respectives d'approximativement de 3 à 7 propres à obtenir une mullitisation à haute température lors de la montée en température.

Application à la réalisation de revêtements de protection ou d'objets moulés notamment destinés aux installations de coulée en continu de l'acier par injection à froid.

EP 0 144 303 A1

## Composition de béton réfractaire et application en métallurgie.

La présente invention concerne une composition de béton réfractaire amélioré qui présente de meilleures propriétés physiques, en particulier pour ce qui concerne la résistance aux hautes températures et les paramètres de résistance mécanique. Ces compositions sont en particulier destinées à des usages métallurgiques et d'autres applications où sont requises de fortes résistances de cette composition à l'abrasion-compression et l'invention s'étend à l'application desdites compositions pour les usages métallurgiques, comportant une injection à froid.

Les compositions de béton réfractaires sont largement utilisées pour la réalisation de garniture de fours et poches de coulées à usage métallurgique, et en particulier pour la réalisation de pièces moulées obtenues par injection de béton dans des gabarits et destinées à la coulée continue de l'acier, tels que les distributeurs dits "tundish".

Initialement, la réalisation d'une composition de béton réfractaire nécessitait l'utilisation de quantités relativement importantes (de l'ordre de 20%) de liants sous forme d'un ciment réfractaire. La quantité importante de liants nécessaires était due au fait que les grains de liants formaient des grumeaux et n'étaient donc pas totalement disponibles avec l'intégralité de leur surface pour la fonction de liants.

Cependant, la teneur élevée en chaux du ciment réfractaire agit sur la température limite d'utilisation du béton réfractaire et on a donc cherché à abaisser la teneur en ciment.

Une solution partielle à ces difficultés a été obtenue par l'utilisation de bétons thixotropiques comportant des agents défloculants et, de préférence, des liants très fins, de manière à ce que tous les grains du liant puissent exercer leur action. Du fait que les agents défloculants permettent de détruire les grumeaux, la teneur en ciment réfractaire de la composition peut être quelque peu abaissée, ce qui augmente la température limite d'utilisation.

On connait par le document EP-A-0004509 des compositions réfractaires utiles pour la production de pâtes à faible teneur en eau destinées à être projetée dans une maçonnerie chaude, comprenant les constituants essentiels suivants :

(1) 30 à 60% en poids d'une fraction grossière constituée de grains dont plus de 50% sont supérieurs à 0,5 mm;

(2) 10 à 30% en poids d'une fraction fine constituée de particules dont au moins 50% sont inférieures à 75 microns;

(3) 10 à 30% en poids d'une fraction très fine constituée de particules dont au moins 50% sont inférieures à 5 microns;

(4) 10 à 30% en poids d'une fraction ultra-fine constituée de particules dont au moins 80% sont inférieures à 0,1 micron;

les fractions (1) à (4) étant formées de matières minérales.

Ces compositions ne permettent pas de concilier les exigences d'une bonne résistance aux hautes températures avec une prise rapide facilitant le démoulage ou décoffrage du gabarit dans lequel le produit est injecté à froid.

Par le document CHEMICAL ABSTRACTS, Vol 96, n° 8, février 1982, page 304, résumé 56852d (Colombus, Ohio US) on connait un mélange contenant 60 à 80% d'agrégats primaires, 10 à 40% d'autres agrégats réfractaires, 1 à 5% de fibres d'acier inoxydables, 1 à 15% d'argile réfractaire, 1 à 8% de ciment d'aluminate de calcium, un agent d'ouvrabilité et de la poudre d'aluminium.

Cette composition qui est destinée au bouchage de trous de coulée et donc à un travail à chaud. La présence d'argile qui perturbe le comportement de la composition lorsqu'elle est soumise à de hautes températures la rend impropre à l'usage envisagé selon l'invention.

La présente invention vise à réaliser des compositions de béton réfractaire présentant un bon comportement à haute température qui sont également aptes à être injectées à froid dans des gabarits en vue de la réalisation d'éléments utilisés dans la coulée continue de l'acier et qui se caractérisent par des comportements de prise tels qu'un démoulage rapide soit possible.

Le but visé par l'invention est atteint par une composition de béton refractaire constituée à raison de 5 à 20%, et de préférence à raison d'environ 10% d'un liant constitué de silice d'une granulométrie inférieure à 5 $\mu$m et de préférence comprise entre 0 et 2 $\mu$m et d'un composé alumineux à haute teneur en alumine d'une granulométrie inférieure à 20 $\mu$m et de préférence comprise entre 0 et 10 $\mu$m dans un rapport de l'ordre de 3 à 7 pour permettre mullitisation à haute température lors de la mise en oeuvre, le solde de la composition pour atteindre 100% étant constitué par une faible proportion de ciment réfractaire, par des agrégats réfractaires, par des agents défloculants classiques et d'autres additifs éventuels.

On entend par composé alumineux à haute teneur en alumine, une alumine ou un corindon contenant plus de 90% d'$Al_2O_3$.

Il est également apparu particulièrement avantageux que ladite silice contienne 0,2 à 5,0% et de préférence environ 2% de carbone. Avantageusement, ce carbone recouvre les grains. La silice prend en conséquence un aspect gris à noirâtre, en particulier lorsqu'elle est mouillée et il semble que la présence de carbone contribue à améliorer les propriétés du produit, notamment en vue de sa mise en oeuvre par injection.

Le ciment réfractaire présent dans ledit solde de la composition est choisi essentiellement en fonction du type d'agrégats et est présent en une quantité, exprimée par rapport à la composition totale, de l'ordre d'environ 0,5 à 15%, une teneur de l'ordre de 12% constituant un exemple typique pour un béton constitué de chamotte à 44% d'$Al_2O_3$ comme agrégat.

Du fait que essentiellement le ciment réfractaire est responsable de la teneur en chaux de la composition finale,
puisque le ciment est essentiellement un aluminate de chaux,
on comprendra qu'on choisira la teneur en ciment réfractaire,
vers les teneurs les plus basses compatibles avec l'usage
envisagé et le choix des agrégats réfractaires, afin d'abaisser la teneur en chaux finale. Les agrégats ajoutés au mélange
sont les agrégats classiques pour le type d'utilisation envisagée. Il peut s'agir d'agrégats alumineux tels que la
chamotte, en particulier la chamotte à basse teneur en alumine ( par exemple 28 à 32%) ou à teneur plus élevée (par
exemple 40 à 45% ou même 55 à 60%) la kerphalite, la bauxite,
le gypsite et aussi des agrégats provenant du concassage
de briques neuves ou usagées,le corindon,etc... L'utilisation
d'agrégats magnésiens, de chromite ou de zircon, relève également du cadre de l'invention.

La composition contiendra également les agents défloclants classiques en vue de former des compositions thixotropiques tels que les silicates, les phosphates, les carbonates,
ou des défloculants organiques tels que les humates,gluconates
etc.

La composition peut également contenir d'autres
additifs éventuels et, à titre d'exemple, on citera l'adjonction dans la composition de ferrosilicium à raison d'une
teneur de l'ordre de 2%, cet additif ayant la propriété
d'augmenter la température d'affaissement sous charge de
même que l'addition d'aluminium en poudre qui permet un séchage plus  aisé du produit.

La composition de béton réfractaire trouve son application dans tous les usages métallurgiques.

La composition présente en particulier l'avantage
qu'elle peut être préparée en vue de sa mise en oeuvre
avec des teneurs très faibles en eau et qu'elle présente
un bon comportement en particulier lors de la mise en oeuvre
par vibration à l'aiguille ou à la table ainsi que lors d'une
mise en  oeuvre par injection.

Le composé alumineux à haute teneur en alumine d'une
granulométrie inférieure à 20 $\mu$m peut être avantageusement

un corindon , une alumine calcinée etc.

Il convient de noter que l'utilisation du liant composé de silice et d'agrégats notamment . tel que décrits a déjà été proposé comme additif dans des compositions de bétons qui ne sont pas réfractaires et qui sont destinés essentiellement à des usages de construction.

Il est cependant particulièrement inattendu d'utiliser selon l'invention, pour des usages de bétons réfractaires, des compositions qui comportent à la fois de la silice et de l'alumine, car généralement, en particulier lorsqu'on utilise des agrégats réfractaires alumineux, on tente de réduire la teneur en silice à la plus basse valeur possible.

Sans que la Demanderesse entende se limiter à une quelconque explication particulière, elle pense que les résultats améliorés observés avec les compositions de l'invention, en particulier pour ce qui concerne les caractéristiques de réfractarité, résultent vraisemblablement de la mullitisation qui se produit lors de la montée en température . . du produit, le composé qui se forme étant de la mullite ou un composé apparenté dont les propriétés concourent à un meilleur comportement du béton.

Les composés de l'invention, ainsi qu'il a été mentionné, peuvent être mis en oeuvre par tous moyens appropriés pour former des revêtements de protection ou des objets moulés notamment destinés aux installations de coulée en continu de l'acier.

L'invention sera décrite plus en détail en référence aux exemples qui suivent qui tout d'abord illustrent une composition de l'invention et, dans les exemples ultérieurs, des compositions d'état de la technique, afin de mettre en évidence les propriétés améliorées obtenues par la présente invention.

Ces exemples n'ont cependant aucun caractère limitatif et sont destinés uniquement à illustrer une des formes d'exécution de l'invention.

Il convient de noter que,dans le présent mémoire descriptif, les proportions indiquées sont, sauf indication en sens contraire, toujours des pourcentages exprimés en poids. Lorsque des proportions respectives sont exprimées en parties, il s'agit également de parties en poids.

EXEMPLE 1

On prépare un mélange:

| | |
|---|---|
| Ciment (Aluminate de chaux type SECAR 70) ....... | .12% |
| Chamotte à 44% $Al_2O_3$ de granulométrie | |
| 0 à 0,08 mm ................................. | 7% |
| 0,08 à 0,2mm................................. | 5% |
| 0,2 à 2mm................................... | 34% |
| 2 à 4 mm .................................. | 31,9% |
| Corindon de ganulométrie 0 à 10$\mu$ | 7% |
| Silice de granulométrie 0 à 2$\mu$ contenant 2% de C.... | 3% |
| Défloculant tel que par exemple Héxametaphosphate de | |
| sodium..................................... | 0,1% |

Caractéristiques obtenues (Abrasion/Cohésion suivant essais Jourdain comparativement à des produits existant de même teneur en ciment):

TABLEAU I

| $T^o$ de cuisson | Composition de l'invention | Produits du commerce A | B |
|---|---|---|---|
| 300° C | i = 3,2 | i= 16 | i= 18,42 |
| 800° C | i= 4,49 | i= 16 | i= 16,96 |
| 1000° C | i= 5,4 | i= 19,1 | i= 18,18 |
| 1100° C | i= 4,4 | i= 16,24 | i= 16,41 |
| 1200° C | i= 4,7 | i= 14,8 | i= 19,25 |
| 1300° C | i= 5 | i= 14,8 | i= 18,24 |
| 1400° C | i= 5 | i= 12,6 | i= 18.65 |
| | | | |

i = Perte de poids après essais exprimée en %.

## EXEMPLE 2

On prépare un mélange :

| | |
|---|---|
| Ciment (Aluminate de chaux : SECAR 70) | 10% |
| Silice colloïdale | 3% |
| Corindon fin (inférieur 20 $\mu$m) | 7% |
| Chamotte à 60% d'alumine | |
| – granulométrie 3 à 6 $\mu$m | 25% |
| – granulométrie 1 à 3 $\mu$m | 22% |
| – granulométrie 0 à 1 $\mu$m | 25% |
| – granulométrie DIN 70 (0 à 80 $\mu$m) | 8% |

On ajoute à ce mélange 0,1% de défloculant du type de l'hexamétaphosphate de sodium.

Ce mélange est separé en deux portions égales, la première étant utilisée seule (préparation A), la seconde recevant une adjonction à raison de 2% (adjonction de 20 kg par tonne) de ferrosilicium (préparation B).

Après adjonction d'eau de gâchage en quantité nécessaire selon les indications du Tableau II ci-après on a mesuré la compression à température ordinaire (CTO) après prise et après cuisson pendant 5 heures à différentes températures. Les valeurs mesurées exprimées en unités Pascal sont reprises dans le Tableau II.

On a mesuré également la dilatation exprimée comme la température en °C pour 0,5% de dilatation ($t_{0,5}$) et 1% de dilatation ($t_1$), la température en °C du plus grand écart entre la dilatation et le retrait ($t°$ creux) et le retrait correspondant en %.

L'affaissement sans charge de 1 kg/cm$^2$ d'une éprouvette normalisée (5 cm de hauteur et 5 cm de diamètre) en fonction de la montée en température aux valeurs $t_{0,5}$, $t_1$, $t_2$, $t_5$ exprimé en °C a été également mesurée.

Les valeurs du Tableau II indiquent la remarquable amélioration du comportement de la préparation B (contenant du ferrosilicum).

Dans les deux cas cependant les preparations sont facilement injectables dans des gabarits froids et se laissent facilement démouler.

## TABLEAU II

| Préparation | | A | B |
|---|---|---|---|
| Eau de gâchage % | | 6,66 | 5,71 |
| CTO, après cuisson à pendant 5h | après prise | 82,02 | 73,46 |
| | 110°C | 81,27 | 119,96 |
| | 400°C | 82,25 | 128,66 |
| | 1000°C | 69,86 | 103,70 |
| | 1200°C | 68,01 | 126,01(2) (3) |
| | 1300°C | 72,96 | 134,74(2) (3) |
| | 1400°C | 63,98(1) | 142,95(2) (3) |
| | 1500°C | 76,47(1) | 172,74(2) |
| Dilatation | $t_{0,5}$(°C) | 1440 | ---- |
| | $t_1$(°C) | 1506 | ---- |
| | t°creux(°C) | 1520 | 1465 |
| | avec retrait de % | 0,97 | 0,38 |
| Affaissement sous charge 1 kg/cm$^2$ (°C) | $t_{0,5}$ | 1330 | 1352 |
| | $t_1$ | 1382 | 1404 |
| | $t_2$ | 1427 | 1470 |
| | $t_5$ | 1480 | 1675 |

(1) fissures après cuisson
(2) rupture par éclatement
(3) coeur noir

REVENDICATIONS

1. Composition de béton réfractaire destinée notamment aux usages métallurgiques caractérisée en ce qu'elle est constituée à raison de 5 à 20%, et de préférence à raison d'environ 10% d'un liant constitué de silice d'une granulométrie inférieure à 5 μm et de préférence comprise entre 0 et 2 μm et d'un composé alumineux à haute teneur en alumine d'une granulométrie inférieure à 20 μm et de préférence comprise entre 0 et 10 μm dans un rapport de l'ordre de 3 à 7 pour permettre mullitisation à haute température lors de la mise en oeuvre, le solde de la composition pour atteindre 100% étant constitué par une faible proportion de ciment réfractaire, par des agrégats réfractaires, par des agents défloculants classiques et d'autres additifs éventuels.

2. Composition selon la revendication 1 caractérisé en ce que ladite silice contient 0,2 à 5,0% et de préférence environ 2% de carbone qui recouvre les grains.

3. Composition selon la revendication 1 ou 2 caractérisée en ce que le ciment réfractaire présent dans ledit solde de la composition est choisi essentiellement en fonction du type d'agrégats et est présent en une quantité, exprimée par rapport à la composition totale, de l'ordre d'environ 0,5 à 15%.

4. Composition selon la revendication 3 caractérisée en ce que ledit ciment réfractaire est présent en une quantité de l'ordre de 12%.

5. Composition selon l'une quelconque des revendications 1 à 4 caractérisée en ce que les agrégats présents dans le mélange sont des agrégats alumineux tels que la chamotte, en particulier la chamotte à basse teneur en alumine (28à60%), la kerphalite,la bauxite ou le corindon, sillimanite,kyanite,alumine tabulaire.

6. Composition selon l'une quelconque des revendications 1 à 4 caractérisée ence que les agrégats présents dans le mélange sont des agrégats magnésiens, de chromite ou de zircon, de silicate de magnésie et de produits de composition provenant du concassage de briques neuves ou usagées.

7. Composition selon l'une quelconque des revendications 1 à 6 caractérisée en ce que la composition contient des agents défloculants classiques en vue de former des compositions thixotropiques notamment les silicates, les phosphates ou les carbonates ou de défloculants organiques.

8. Composition selon l'une quelconque des revendications 1 à 7 caractérisée en ce qu'elle contient un ferrosilicium en une teneur de 0 à 4% et de préférence de l'ordre de 2%.

9. Composition selon l'une quelconque des revendications 1 à 8 caractérisée en ce que le composé alumineux à haute teneur en alumine d'une granulométrie inférieure à 20$\mu$m est un corindon.

10. Composition selon l'une quelconque des revendications 1 à 9 caractérisée en ce qu'elle contient de l'aluminium en poudre.

11. Application de la composition selon l'une quelconque des revendications 1 à 10 en métallurgie pour la réalisation de revêtements de protection ou d'objets moulés notamment destinés aux installations de coulée en continu de l'acier par injection à froid.

**0144303**

Numéro de la demande

Office européen
des brevets

**RAPPORT DE RECHERCHE EUROPEENNE**

EP 84 87 0158

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | EP-A-0 004 509 (S.E.P.R.)<br><br>* Revendications 1-10; page 6, lignes 20-33; page 7, lignes 1-15 *<br><br>--- | 1-3,5, 7,9,11 | C 04 B 35/66<br>C 04 B 28/06 |
| D,X | CHEMICAL ABSTRACTS, vol. 96, no. 8, février 1982, page 304, no. 56852d, Columbus, Ohio, US; & JP - A - 81 120 577 (NIPPON STEEL CORP.) 21-09-1981<br><br>--- | 1,3,5- 7,9-11 | |
| A | CHEMICAL ABSTRACTS, vol. 98, no. 16, avril 1983, page 303, no. 131255h, Columbus, Ohio, US; & JP - A- 82 156 379 (NIPPON KOKAN K.K.) 27-09-1982<br><br>--- | 1-11 | |
| A | EP-A-0 030 181 (C.E.C.)<br><br>* Revendications 1-6; pages 10-12, exemples 1-3 *<br><br>--- | 1-3,5, 7,9 | **DOMAINES TECHNIQUES RECHERCHES (Int. Cl.4)**<br><br>C 04 B |
| A | FR-A-2 429 193 (HÖGANAS AB)<br><br>* Revendications; page 3, lignes 19-38 *<br><br>--- | 1-3,5- 7,9 | |
| A | FR-A-2 059 789 (ECOTEC)<br>* Revendications 1,4; page 2, lignes 19-20 *<br><br>--- -/- | 1 | |

Le présent rapport de recherche a été établi pour toutes les revendications

| Lieu de la recherche<br>LA HAYE | Date d'achèvement de la recherche<br>25-02-1985 | Examinateur<br>SCHURMANS H.D.R. |
|---|---|---|

Office européen
des brevets

**RAPPORT DE RECHERCHE EUROPEENNE**

| | **DOCUMENTS CONSIDERES COMME PERTINENTS** | | **Page 2** |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 523 571 (ARGILES & MINERAUX AGS-BMP) * Revendications 1-6 * ----- | 1,3-7 | |
| | | | **DOMAINES TECHNIQUES RECHERCHES (Int. Cl.4)** |

Le présent rapport de recherche a été établi pour toutes les revendications

| Lieu de la recherche LA HAYE | Date d'achèvement de la recherche 25-02-1985 | Examinateur SCHURMANS H.D.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82